# EUROPEAN PATENT APPLICATION

(11) **EP 4 538 110 A1**
(43) Date of publication of application: **16.04.2025**
(21) Application number: 23819084.7
(22) Date of filing: 05.06.2023
(51) Int. Cl.: B60L 53/80

(54) **BATTERY SWAPPING STATION AND BATTERY SWAPPING METHOD**

(30) Priority: 06.06.2022 CN 202210629097
(71) Applicant: Contemporary Amperex Technology (Hong Kong) Limited, Central, Hong Kong (HK)
(72) Inventor: CHEN, Disong, Ningde, Fujian 352100 (CN); YE, Qingfeng, Ningde, Fujian 352100 (CN); QUE, Shibiao, Ningde, Fujian 352100 (CN); CHEN, Can, Ningde, Fujian 352100 (CN); CHEN, Dewei, Ningde, Fujian 352100 (CN)
(74) Representative: Ran, Handong
(86) International application number: PCT/CN2023/098434
(87) International publication number: WO 2023/236919

(57) **Abstract**

A battery swapping station, the battery swapping station comprising a battery swapping operation room (10) and a battery compartment (20). The battery swapping operation room (10) is used for swapping a battery in an electric apparatus. The battery compartment (20) is used for storing batteries and charging same. The battery compartment (20) is provided with a communication opening (1), the communication opening (1) communicating the battery swapping operation room (10) and the battery compartment (20), and the communication opening (1) being used for a battery to enter and exit the battery compartment (20). The communication opening (1) is arranged so as to help a battery to move between the battery swapping operation room (10) and the battery compartment (20), so that the moving distance of the battery between the battery swapping operation room (10) and the battery compartment (20) is reduced, the time of a battery swapping operation process is reduced and the battery swapping efficiency is improved. Also provided is a battery swapping method.

## Description

### CROSS-REFERENCE TO RELATED APPLICATIONS

This application claims priority to Chinese Patent Application No. 202210629097.7, filed on June 06, 2022 and entitled "BATTERY SWAP STATION AND BATTERY SWAP METHOD", which is incorporated herein by reference in its entirety.

### TECHNICAL FIELD

This application belongs to the technical field of battery swap stations, and in particular, to a battery swap station and a battery swap method.

### BACKGROUND

With development of new energy technologies, batteries are widely used in electrical apparatuses, such as mobile phones, notebook computers, battery cars, electric cars, electric planes, electric ships, electric toy cars, electric toy ships, electric toy planes and electric tools.

Limited by battery capacity, the electrical apparatuses need to be charged frequently, and charging is time-consuming, which affects the user experience.

### SUMMARY

An implementation of this application provides a battery swap station and a battery swap method, facilitating quick replenishment of electrical energy.

A first aspect of implementations of this application provides a battery swap station, including a battery swap operation room and a battery compartment. The battery swap operation room is used for battery replacement of an electrical apparatus. The battery compartment is used for storing and charging batteries, and the battery compartment is provided with a communicating opening, the communicating opening communicates the battery swap operation room with the battery compartment, and the communicating opening is used for the batteries to get in or out of the battery compartment.

By adoption of the above structure, by providing the communicating opening, it is possible to facilitate the movement of the batteries between the battery swap operation room and the battery compartment, shorten the movement distance of the batteries between the battery swap operation room and the battery compartment, reduce the process time of the battery swap work, and improve the battery swap efficiency.

In some implementations of this application, the battery swap operation room and the battery compartment are adjacently arranged, the battery compartment includes a compartment wall facing toward the battery swap operation room, and the communicating opening is disposed in the compartment wall.

By adoption of the above structure, the battery swap operation room and the battery compartment are adjacently arranged, and the communicating opening is disposed in the compartment wall of the battery compartment facing toward the battery swap operation room, so that a movement distance of the batteries between the battery swap operation room and the battery compartment can be further shortened, thereby improving the battery swap efficiency.

In some implementations of this application, charging devices are disposed inside the battery compartment and include charging bases and charging cabinets, the charging bases are used for storing the batteries, and the charging cabinets are used for charging the batteries through the charging bases.

By adoption of the above structure, by providing the charging bases and the charging cabinets, the batteries can be stored, and charged while being placed.

In some implementations of this application, the battery swap operation room and the battery compartment are adjacently arranged in a first direction, and the plurality of charging bases are provided and arranged in the first direction.

By adoption of the above structure, by arranging the charging bases in the same direction as the arrangement of the battery compartment and the battery swap operation room, the batteries basically move in a straight line between the battery swap operation room and the charging bases, which can not only shorten the movement distance of the batteries in the battery swap process, but also facilitate erection of an execution mechanism used for replacing the batteries.

In some implementations of this application, in the first direction, the communicating opening is disposed on one side of the plurality of charging devices close to the battery swap operation room, and the communicating opening is opposite to at least some of the charging bases.

By adoption of the above structure, by making the communicating opening be opposite to at least some of the charging bases, the batteries can be conveniently and directly moved out of the communicating opening after being removed from the charging bases, thereby shortening the movement distance of the batteries from the charging bases to the communicating opening.

In some implementations of this application, the plurality of charging bases are configured as two rows spaced apart in a second direction, the second direction intersects the first direction, and in the first direction, at least a portion of the communicating opening is opposite to at least one row of the charging bases.

By adoption of the above structure, the charging bases are provided as two rows, so as to optimize distribution of the charging bases in the battery compartment and conveniently improve the battery storage capacity of the battery compartment. Secondly, the communicating opening is opposite to at least one row of the charging bases, so that the relative distance between some of the charging bases and the communicating opening is shortened, and the movement efficiency of the batteries in the battery compartment is improved.

In some implementations of this application, in the first direction, at least a portion of the communicating opening is opposite to an interval between two rows of the charging bases.

By adoption of the above structure, the communicating opening is opposite to the interval, so that movement or gesture adjustment of the batteries in the battery compartment can be conveniently achieved through the interval, the distance from each charging base to the communicating opening is also balanced, and the movement distance of the batteries in the battery compartment is shortened on the whole.

In some implementations of this application, the battery compartment includes a first layer and a second layer which are arranged in a vertical direction, the first layer is located below the second layer, the vertical direction is perpendicular to the first direction and the second direction, the communicating opening is disposed on the second layer, the charging bases include first charging bases closest to the communicating opening, and at least a part of the first charging bases are disposed on the first layer.

By adoption of the above structure, the battery compartment is set to be of a two-layer structure, so that the whole space of the battery compartment is increased, centralized erection of the charging cabinets and the charging bases is also facilitated, the set number of the charging bases is conveniently increased, and the battery storage capacity of the battery compartment is further improved. Secondly, the communicating opening is disposed on the second layer, so that the batteries have a certain height when leaving the battery compartment, the batteries can be conveniently installed after entering the battery swap operation room, and the workload for height adjustment is reduced.

In some implementations of this application, in the vertical direction, the first charging bases are lower than or flush with a lower edge of the communicating opening.

By adoption of the above structure, the first charging bases are set to be lower than or flush with the lower edge of the communicating opening, so that the structure in which the periphery of the communicating opening is higher than the lower edge of the communicating opening is reduced, the communicating opening has a large unobstructed space, the batteries are conveniently subjected to gesture adjustment at the communicating opening so as to match with differently shaped battery swap apparatuses in the battery swap operation room, and the installation accuracy is improved.

In some implementations of this application, in the vertical direction, the first charging bases are lower than the lower edge of the communicating opening and at least apart from the lower edge of the communicating opening at a preset distance, used for placing the batteries on the first charging bases.

By adoption of the above structure, by setting the preset distance, the space at the first charging bases can be further increased, so that gesture adjustment of the battery at the communicating opening is not affected when the batteries are placed on the first charging bases.

In some implementations of this application, the charging bases further include second charging bases, and the second charging bases are disposed on the second layer.

By adoption of the above structure, the second charging bases are disposed on the second layer, so that the second charging bases match with the set position of the communicating opening and shortens the distance from the second charging bases to the communicating opening, and the second charging bases are also disposed in a centralized manner, and distribution of wirings inside the battery compartment and the charging cabinets is facilitated.

In some implementations of this application, in the vertical direction, the second charging bases are higher than the lower edge of the communicating opening.

By adoption of the above structure, the second charging bases are set to be higher than the lower edge of the communicating opening, so that the space utilization of the second layer by the batteries can be improved, and occupation of the space of the first layer is reduced.

In some implementations of this application, at least some of the charging cabinets are disposed on the first layer, and in one-to-one correspondence with the charging bases.

By adoption of the above structure, the charging cabinets are disposed on the first layer, so that the charging cabinets can be erected in a centralized manner, unified management is facilitated, and one-to-one correspondence between the charging cabinets and the charging bases is also facilitated.

A second aspect of implementations of this application provides a battery swap method, including:
a disassembly step, disassembling a battery on an electrical apparatus in a battery swap operation room and transferring the battery to a battery compartment; and
an assembly step, extracting a battery from the battery compartment and transporting the battery to the battery swap operation room, and assembling the electrical apparatus, the battery swap operation room and the battery compartment being communicated through a communicating opening, and the battery getting in and out of the battery compartment through the communicating opening.

By adoption of the above solution, by providing the communicating opening, the batteries are moved more concisely in the disassembly step and the assembly step, the movement distance of the batteries is shortened, and thus the battery replacement efficiency is improved.

In some implementations of this application, the battery swap method further includes: an adjusting step, conveying the battery to a position in the battery compartment close to the communicating opening so as to adjust a gesture of the battery, so that the battery aligns with the electrical apparatus located in the battery swap operation room.

By adoption of the above solution, through the adjusting step, the gesture of the battery when leaving the communicating opening matches with the electrical apparatus in the battery swap operation room, so that the alignment accuracy of the battery and the electrical apparatus is improved, the battery is conveniently installed onto the electrical apparatus, and thus the time consumed for installing the battery is reduced, and the battery replacement efficiency is improved.

Compared with the related art, in the battery swap station and the battery swap method of the implementations of this application, by providing the communicating opening, the batteries can conveniently move between the battery swap operation room and the battery compartment, the movement distance of the batteries between the battery swap operation room and the battery compartment is shortened, the process time of the battery swap work is reduced, and the battery swap efficiency is improved.

### BRIEF DESCRIPTION OF DRAWINGS

To describe the technical solutions of implementations of this application more clearly, the following outlines the drawings used in the implementations of this application. Evidently, the drawings outlined below are merely a part of implementations of this application. A person of ordinary skill in the art may derive other drawings from the outlined drawings without making any creative efforts.
FIG. 1 is a schematic structural diagram of a vehicle according to some embodiments of this application.
FIG. 2 is a schematic structural diagram of a battery swap station according to some embodiments of this application.
FIG. 3 is a schematic structural diagram of a second layer of a battery swap station according to some embodiments of this application.
FIG. 4 is a schematic structural diagram of a first layer of a battery swap station according to some embodiments of this application.
FIG. 5 is a schematic structural diagram of a communicating opening according to some embodiments of this application.
FIG. 6 is a schematic structural diagram of a communicating opening according to some other embodiments of this application.
FIG. 7 is a schematic flowchart of a battery swap method according to some embodiments of this application.

### List of reference numerals:

1000, Vehicle; 100, Battery; 200, Controller; 300, Motor; 10, Battery swap operation room; 20, Battery compartment; 201, First layer; 202, Second layer; 301, Charging base; 302, Charging cabinet; 303, Cooling system; 304, First charging base; and 1, Communicating opening.

### DETAILED DESCRIPTION OF EMBODIMENTS

Implementations of the technical solutions of this application will be described in detail below in conjunction with the accompanying drawings. The following implementations are merely intended as examples to describe the technical solutions of this application more clearly, but not intended to limit the protection scope of this application.

Unless otherwise defined, all technical and scientific terms used herein bear the same meanings as what is normally understood by a person skilled in the technical field of this application. The terms used herein are merely intended to describe specific implementations but not to limit this application. The terms "include" and "contain" and any variations thereof used in the specification, claims, and brief description of the accompanying drawings of this application are intended as non-exclusive inclusion.

In the description of the implementations of this application, the technical terms "first" and "second", etc. are merely intended to distinguish between different items but not intended to indicate or imply relative importance or implicitly specify the number of the indicated technical features, specific order, or order of precedence.

Reference to "implementation" herein implies that particular features, structures, or characteristics described in conjunction with an implementation may be included in at least one implementation of this application. The presence of the phrase at various places in the specification does not necessarily refer to the same implementation, nor is it a separate or alternative embodiment that is mutually exclusive of other implementations. It is understood by those skilled in the art, both explicitly and implicitly, that the implementations described herein may be combined with other implementations.

In the description of the implementations of this application, the term "and/or" merely indicates a relationship between related items, and represents three possible relationships. For example, A and/or B may represent the following three circumstances: A alone, both A and B, and B alone. In addition, the character "/" herein generally indicates that the related items before and after are in an "or" relationship.

In the description of the implementations of this application, the term "a plurality of" means two or more (including two). Similarly, "a plurality of groups" means two or more groups (including two groups), and "a plurality of pieces" means two or more pieces (including two pieces).

In the description of the implementations of this application, a direction or a positional relationship indicated by the technical terms, such as "center", "longitudinal", "transverse", "length", "width", "thickness", "up", "down", "before", "after", "left", "right", "vertical", "horizontal", "top", "bottom", "in", "out", "clockwise", "counterclockwise", "axial", "radial", and "circumferential" is a direction or positional relationship based on the illustration in the accompanying drawings, and is merely intended for ease or brevity of description of the implementations of this application, but not intended to indicate or imply that the indicated apparatus or component is necessarily located in the specified direction or constructed or operated in the specified direction. Therefore, such terms are not to be understood as a limitation on the implementations of this application.

In the description of the implementations of this application, unless otherwise explicitly provided and limited, the technical terms, such as "mount," "connect," "couple," and "fix" should be understood broadly, which, for example, may refer to a fixed connection, a detachable connection, or an integral connection; which may refer to a mechanical connection or an electrical connection; which may refer to a direct connection or an indirect connection via an intermediate medium; and which may also refer to a communication between the insides of two elements, or an interaction relationship between two elements. For those of ordinary skill in the art, the specific meaning of the above terms in the implementations of this application may be understood according to specific conditions.

At present, with the continuous development of battery technologies, the application scenarios of batteries are also increasing, and how to quickly replenish the electrical energy of the batteries has become one of the factors limiting the promotion of the batteries. According to the principle of storing energy in the batteries themselves, the batteries need to be replenished with the electric energy periodically, and the batteries are replenished with the electric energy in the form of charging for a longer period of time. Therefore, by directly replacing depleted batteries with fully charged batteries for electrical apparatuses, the efficiency of replenishing the electrical energy for the electrical apparatuses can be effectively improved.

However, the applicant found that the direct replacement of batteries introduces the processes of battery removal, installation and transfer, and due to the large self-weight of the batteries themselves, it is difficult to realize the steps of removal, installation and transfer, and usually there is a certain distance between a battery swap operation room and a battery compartment, which are not directly connected, so the direct replacement of the batteries still consumes long time.

Based on the above considerations, in order to improve the replacement efficiency of the batteries, the inventor of this application, after in-depth research, designs a battery swap station and a battery swap method, which reduces the transfer distance of the batteries, shortens the transfer consumed time, and improves the replacement efficiency by optimizing the architectural layout of a battery compartment and a battery swap operation room.

A battery mentioned in an embodiment of this application means a unitary physical module that includes one or more battery cells to provide a higher voltage and a higher capacity. For example, the battery may include a battery module, a battery pack, or the like.

The battery swap station and battery swap method used for swapping the battery according to an embodiment of this application may be used for a vehicle. The vehicle may be an oil-fueled vehicle, a natural gas vehicle, or a new energy vehicle. The new energy vehicle may be a battery electric vehicle, a hybrid electric vehicle, a range-extended electric vehicle, or the like. Exemplarily, an electrical apparatus may be a heavy-duty truck.

For ease of description in the following embodiments, a vehicle is used as an example of the electrical apparatus according to an embodiment of this application.

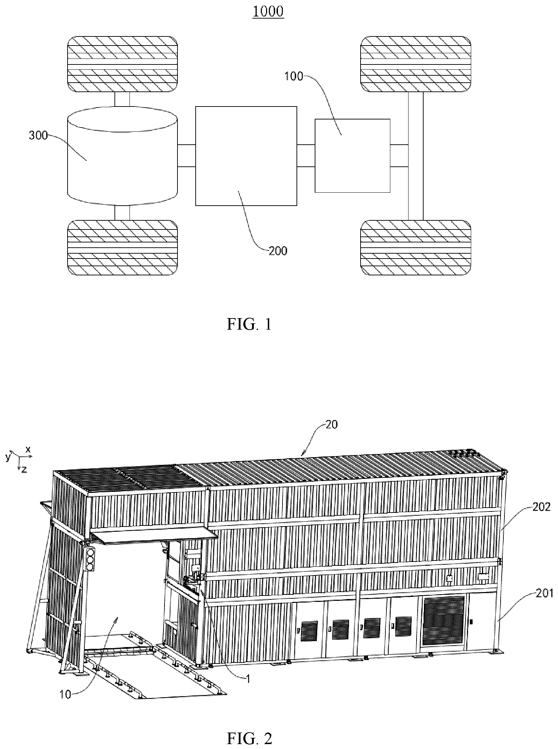

As shown in FIG. 1, FIG. 1 is a schematic structural diagram of a vehicle according to some embodiments of this application. The vehicle 1000 may be an oil-fueled vehicle, a natural gas vehicle, or a new energy vehicle. The new energy vehicle may be a battery electric vehicle, a hybrid electric vehicle, a range-extended electric vehicle, or the like. A battery 100 is disposed inside the vehicle 1000. The battery 100 may be disposed at the bottom, front, or rear of the vehicle 1000. The battery 100 may be used for supplying power to the vehicle 1000. For example, the battery 100 may serve as an operating power supply of the vehicle 1000. The vehicle 1000 may further include a controller 200 and a motor 300. The controller 200 is used for controlling the battery 100 to supply power to the motor 300, for example, to meet the operating power requirements of the vehicle 1000 in start, navigation and running.

In some embodiments of this application, the battery 100 serves not only as an operating power supply of the vehicle 1000, but may also serve as a drive power supply of the vehicle 1000 to provide a driving power supply for the vehicle 1000 in place of or partly in place of fuel oil or natural gas.

As shown in FIG. 2, FIG. 2 is a schematic diagram of a battery swap station according to some embodiments of this application. In some embodiments of this application, a battery swap station is provided, including a battery swap operation room 10 and a battery compartment 20. The battery swap operation room 10 is used for battery replacement of an electrical apparatus. The battery compartment 20 is used for storing and charging batteries, and the battery compartment 20 is provided with a communicating opening 1, the communicating opening 1 communicates the battery swap operation room 10 with the battery compartment 20, and the communicating opening 1 is used for the batteries to get in or out of the battery compartment 20.

The battery swap operation room 10 is used for holding the electrical apparatus, and providing a work space for performing battery removal or installation work on the electrical apparatus. The battery swap operation room 10 may be a closed plant, or a semi-open parking platform.

The battery compartment 20 is used for storing the batteries and charging the stored batteries. The battery compartment 20 may be a separate house disposed inside the battery swap operation room 10, or a separate house or plant disposed outside the battery swap operation room 10.

The communicating opening 1 is used for communicating the battery swap operation room 10 with the battery compartment 20. The communicating opening 1 may be a window, a doorway, etc. disposed in the wall between the battery swap operation room 10 and the battery compartment 20.

The battery compartment 20 can protect the batteries and reduce the safety risk. By providing the communicating opening 1, it is possible to facilitate the movement of the batteries between the battery swap operation room 10 and the battery compartment 20, shorten the movement distance of the batteries between the battery swap operation room 10 and the battery compartment 20, reduce the process time of the battery swap work, and improve the battery swap efficiency.

Optionally, the battery swap station further includes a transfer apparatus, the transfer apparatus is used for transferring the batteries, and the transfer device is configured to be able to drive the batteries between a parking platform and the battery compartment 20 for replacing the battery of the electrical apparatus.

Optionally, the battery swap station further includes a track on which the transfer apparatus is movably disposed. The track is used for guiding the transfer apparatus to move, so that the transfer apparatus can move between the parking platform and the battery compartment 20. Exemplarily, one end of the track extends into the battery compartment 20 and the other end extends into the parking platform.

Optionally, a stacker is provided in the battery compartment 20, and the stacker is used for transferring the to-be-charged batteries removed by the transfer apparatus to charging bases of the battery compartment 20 for charging, and placing the fully charged batteries stored in the battery compartment 20 onto the transfer apparatus.

Optionally, there may be one or more communicating openings 1.

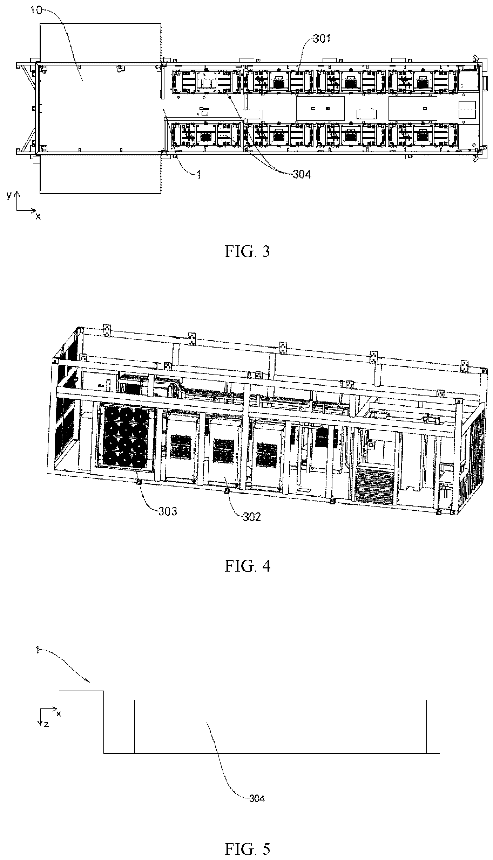

As shown in FIG. 2 and FIG. 3, FIG. 3 is a schematic structural diagram of a second layer 202 of a battery swap station according to some embodiments of this application. In some implementations of this application, the battery swap operation room 10 and the battery compartment 20 are adjacently arranged. The battery compartment 20 includes a compartment wall facing toward the battery swap operation room 10, and the communicating opening 1 is disposed in the compartment wall. The battery swap operation room 10 and the battery compartment 20 are adjacently arranged, and the communicating opening 1 is disposed in the compartment wall of the battery compartment 20 facing toward the battery swap operation room 10, so that the movement distance of the batteries between the battery swap operation room 10 and the battery compartment 20 can be further shortened, thereby improving the battery swap efficiency.

Optionally, the battery swap operation room 10 is the semi-open parking platform, and the communicating opening 1 directly communicates with the parking platform.

As shown in FIG. 2 to FIG. 4, FIG. 4 is a schematic structural diagram of a first layer 201 of a battery swap station according to some embodiments of this application. In some implementations of this application, charging devices are disposed inside the battery compartment 20 and include charging bases 301 and charging cabinets 302, the charging bases 301 are used for storing the batteries, and the charging cabinets 302 are used for charging the batteries through the charging bases 301.

The charging bases 301 are used for being connected to the bottoms of the batteries, charging connectors may be disposed on the charging bases, one ends of the charging connectors are electrically connected to the charging cabinets 302, and the other ends are electrically connected to the batteries when the batteries are placed thereon for transmitting electrical energy to the batteries.

The charging cabinets 302 are used for providing the charging bases 301 with electrical energy of a threshold voltage and electrical energy range, and the charging cabinets 302 may generate electricity, or may be connected to an external power supply and transmit the electrical energy to the charging bases 301, and the threshold voltage and electrical energy range means a voltage and electrical energy range required for charging the batteries.

By providing the charging bases 301 and the charging cabinets 302, the batteries can be stored, and charged while being placed.

Optionally, the charging bases 301 may also be provided with cooling connectors. The battery swap station further includes a cooling system 303. One ends of the cooling connectors are connected to the cooling system 303, and the other ends are connected to the batteries when the batteries are placed thereon, for cooling the charging process of the batteries. Optionally, the cooling system 303 may adopt liquid cooling or air cooling.

Optionally, each charging cabinet 302 further includes a power transformation structure used for changing a voltage value or current value of output electrical energy, for example, a transformer and the like.

As shown in FIG. 2 and FIG. 3, in some implementations of this application, the battery swap operation room 10 and the battery compartment 20 are adjacently arranged in a first direction x, and the plurality of charging bases 301 are provided and arranged in the first direction x.

By arranging the charging bases 301 in the same direction as the arrangement of the battery compartment 20 and the battery swap operation room 10, the batteries basically move in a straight line between the battery swap operation room 10 and the charging bases 301, which can not only the movement distance of the batteries in the battery swap process, but also facilitate erection of an execution mechanism used for replacing the batteries.

Optionally, the first direction x is perpendicular to a plane where the communicating opening 1 is located.

As shown in FIG. 2 and FIG. 3, in some implementations of this application, in the first direction x, the communicating opening 1 is provided in one side of the plurality of charging devices close to the battery swap operation room 10, and the communicating opening 1 is opposite to at least some of the charging bases 301.

The communicating opening 1 being opposite to at least some of the charging bases 301 means that when the charging bases are provided in multiple rows in the first direction, the communicating opening 1 may be located in the same straight line with at least one row of the charging bases 301 at a top view angle. Optionally, when the charging bases are provided in one row in the first direction, the communicating opening 1 may be located in the same straight line with all of the charging bases 301 at the top view angle.

By making the communicating opening 1 be opposite to at least some of the charging bases 301, the batteries can be conveniently and directly moved out of the communicating opening 1 after being removed from the charging bases 301, thereby shortening the movement distance of the batteries from the charging bases 301 to the communicating opening 1.

As shown in FIG. 2 and FIG. 3, in some implementations of this application, the plurality of charging bases 301 are configured as two rows spaced apart in a second direction y, the second direction y intersects the first direction x, and in the first direction x, at least a portion of the communicating opening 1 is opposite to at least one row of the charging bases 301. The charging bases 301 are provided as two rows, so as to optimize distribution of the charging bases 301 in the battery compartment 20 and conveniently improve the battery storage capacity of the battery compartment 20. Secondly, the communicating opening 1 is opposite to at least one row of the charging bases 301, so that the relative distance between some of the charging bases 301 and the communicating opening 1 is shortened, and the movement efficiency of the batteries in the battery compartment 20 is improved.

Optionally, the first direction x and the second direction y may be set at an angle, i.e. the first direction x and the second direction y are set at an acute angle of 30° to 60°. Optionally, the first direction x is perpendicular to the second direction y.

In some implementations of this application, in the first direction x, at least a portion of the communicating opening 1 is opposite to an interval between two rows of the charging bases 301.

The interval refers to a vacant region located between the two rows of the charging bases 301, and can be used for moving the batteries in the battery compartment 20.

The communicating opening 1 is opposite to the interval, so that movement or gesture adjustment of the batteries in the battery compartment 20 can be conveniently achieved through the interval, the distance from each charging base 301 to the communicating opening 1 is also balanced, and the movement distance of the batteries in the battery compartment 20 is shortened on the whole.

As shown in FIG. 2, in some implementations of this application, the battery compartment 20 includes a first layer 201 and a second layer 202 which are arranged in a vertical direction z, the first layer 201 is located below the second layer 202, the vertical direction z is perpendicular to the first direction x and the second direction y, the communicating opening 1 is disposed on the second layer 202, the charging bases 301 include first charging bases 304 closest to the communicating opening 1, and at least a part of the first charging bases 304 are disposed on the first layer 201.

At least a part of the first charging bases 304 being disposed on the first layer 201 means that the first charging bases 304 are disposed on the second layer 202, and the first charging bases 304 are disposed in a position that may be a sunken structure, so that a part of the first charging bases 304 are located in a space of the first layer 201; or that the first charging bases 304 are disposed on the first layer 201, and the first charging bases 304 are disposed in a position that may be a rising structure or a sunken structure, so that a part of the first charging bases 304 are located in a space below the second layer 202 or the first layer 201.

The battery compartment 20 is set to be of a two-layer structure, so that the whole space of the battery compartment 20 is increased, centralized erection of the charging cabinets 302 and the charging bases 301 is also facilitated, the set number of the charging bases 301 is conveniently increased, and the battery storage capacity of the battery compartment 20 is further improved. Secondly, the communicating opening 1 is disposed on the second layer 202, so that the batteries have a certain height when leaving the battery compartment 20, the batteries can be conveniently installed after entering the battery swap operation room 10, and the workload for height adjustment is reduced.

As shown in FIG. 5, FIG. 5 is a schematic structural diagram of a communicating opening 1 according to some embodiments of this application. In some implementations of this application, in the vertical direction z, the first charging bases 304 are lower than or flush with a lower edge of the communicating opening 1. The first charging bases 304 are set to be lower than or flush with the lower edge of the communicating opening 1, so that the structure in which the periphery of the communicating opening 1 is higher than the lower edge of the communicating opening 1 is reduced, the communicating opening 1 has a large unobstructed space, the batteries are conveniently subjected to gesture adjustment at the communicating opening 1 so as to match with differently shaped battery swap apparatuses in the battery swap operation room 10, and the installation accuracy is improved.

Optionally, the highest point of the first charging bases 304 is lower than or flush with the lower edge of the communicating opening 1.

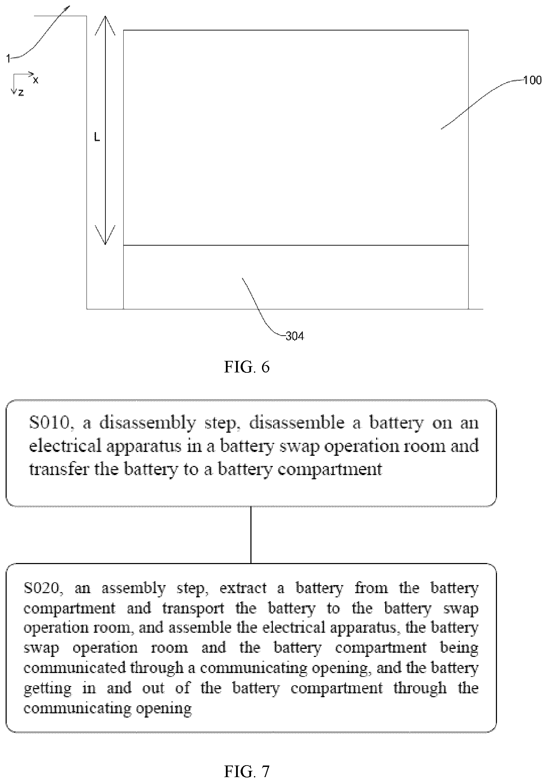

As shown in FIG. 6, FIG. 6 is a schematic structural diagram of a communicating opening 1 according to some other embodiments of this application. In some implementations of this application, in the vertical direction Z, the first charging bases 304 are lower than the lower edge of the communicating opening 1 and at least apart from the lower edge of the communicating opening at a preset distance L, used for placing the batteries on the first charging bases 304.

The preset distance may be set according to the specific size of the batteries stored in the battery compartment 20, generally the height of the batteries.

By setting the preset distance, the space at the first charging bases 304 can be further increased, so that gesture adjustment of the battery at the communicating opening 1 is not affected when the batteries are placed on the first charging bases 304.

In some implementations of this application, the charging bases 301 further include second charging bases 301, and the second charging bases 301 are disposed on the second layer 202.

The second charging bases 301 may refer to all of the charging bases 301 except the first charging bases 304, or may refer to any of the charging bases 301 except the first charging bases 304.

The second charging bases 301 are disposed on the second layer 202, so that the second charging bases match with the set position of the communicating opening 1 and shorten the distance from the second charging bases 301 to the communicating opening 1, and the second charging bases 301 are also disposed in a centralized manner, and distribution of wirings inside the battery compartment 20 and the charging cabinets 302 is facilitated.

In some implementations of this application, in the vertical direction, the second charging bases 301 are higher than the lower edge of the communicating opening 1. The second charging bases 301 are set to be higher than the lower edge of the communicating opening 1, so that the space utilization of the second layer 202 by the batteries can be improved, and occupation of the space of the first layer 201 is reduced.

Optionally, the highest point of the second charging bases 301 is higher than the lower edge of the communicating opening 1.

As shown in FIG. 4, in some implementations of this application, at least some of the charging cabinets 302 are disposed on the first layer 201 and in one-to-one correspondence with the charging bases 301. The charging cabinets 302 are disposed on the first layer 201, so that the charging cabinets 302 can be erected in a centralized manner, unified management is facilitated, and one-to-one correspondence between the charging cabinets 302 and the charging bases 301 is also facilitated.

Optionally, the charging cabinets 302 may be all disposed in the first layer 201, or may be partially disposed in the first layer 201 and partially disposed in the second layer 202, or may be partially disposed in the first layer 201 and partially disposed below the first layer 201.

As shown in FIG. 7, FIG. 7 is a schematic flowchart of a battery swap method according to some embodiments of this application. In some implementations of this application, a battery swap method is provided, including:

S010, a disassembly step, disassembling a battery on an electrical apparatus in a battery swap operation room 10 and transferring the battery to a battery compartment 20; and

S020, an assembly step, extracting a battery from the battery compartment 20 and transporting the battery to the battery swap operation room 10, and assembling the electrical apparatus, the battery swap operation room 10 and the battery compartment 20 being communicated through a communicating opening 1, and the battery getting in and out of the battery compartment 20 through the communicating opening 1.

By providing the communicating opening 1, the batteries are moved more concisely in the disassembly step and the assembly step, the movement distance of the batteries is shortened, and thus the battery replacement efficiency is improved.

In some implementations of this application, S020 further includes: an adjusting step, conveying the battery to a position in the battery compartment 20 close to the communicating opening 1 so as to adjust a gesture of the battery, so that the battery aligns with the electrical apparatus located in the battery swap operation room 10.

Through the adjusting step, the gesture of the battery when leaving the communicating opening 1 matches with the electrical apparatus in the battery swap operation room 10, so that the alignment accuracy of the battery and the electrical apparatus is improved, the battery is conveniently installed onto the electrical apparatus, and thus the time consumed for installing the battery is reduced, and the battery replacement efficiency is improved. For example, when the electrical apparatus is a vehicle, since the vehicle is not parked to a preset position within the battery swap operation room 10, there is an included angle between a slot body on the vehicle in which the battery is placed and the direction in which the battery leaves the communicating opening 1, and the direction in which the battery leaves the communicating opening 1 can be made to be adapted to be parallel to the direction of the slot body of the electrical apparatus through the adjusting step.

Optionally, adjusting the gesture of the battery may be rotating the battery with the vertical direction as an axis.

In some implementations of this application, provided is a battery swap station, including a battery swap operation room 10 and a battery compartment 20. The battery swap operation room 10 is used for battery replacement of an electrical apparatus. The battery compartment 20 is used for storing and charging batteries, the battery compartment 20 is provided with a communicating opening 1, the communicating opening 1 communicates the battery swap operation room 10 with the battery compartment 20, and the communicating opening 1 is used for the batteries to get in and out of the battery compartment 20. The battery swap operation room 10 and the battery compartment 20 are adjacently arranged, the battery compartment 20 includes a compartment wall facing toward the battery swap operation room 10, and the communicating opening 1 is disposed in the compartment wall. Charging devices are disposed inside the battery compartment 20 and include charging bases 301 and charging cabinets 302, the charging bases 301 are used for storing the batteries, and the charging cabinets 302 are used for charging the batteries through the charging bases 301. The battery swap operation room 10 and the battery compartment 20 are adjacently arranged in a first direction, and the plurality of charging bases 301 are provided and arranged in the first direction. The plurality of charging bases 301 are configured as two rows spaced apart in a second direction, the second direction intersects the first direction, and in the first direction, at least a portion of the communicating opening 1 is opposite to an interval between the two rows of the charging bases 301. The battery compartment 20 includes a first layer 201 and a second layer 202 which are arranged in a vertical direction, the first layer 201 is located below the second layer 202, the vertical direction is perpendicular to the first direction and the second direction, the communicating opening 1 is disposed on the second layer 202, the charging bases 301 include first charging bases 304 closest to the communicating opening 1, and at least a part of the first charging bases 304 are disposed on the first layer 201. In the vertical direction, the first charging bases 304 are lower than the lower edge of the communicating opening 1 and at least apart from the lower edge of the communicating opening at a preset distance, used for placing the batteries on the first charging bases 304. The charging bases 301 further include second charging bases 301, and the second charging bases 301 are disposed on the second layer 202. The charging cabinets 302 are disposed on the first layer 201 and in one-to-one correspondence with the charging bases 301.

Compared with the related art, in the battery swap station and the battery swap method of the implementations of this application, by providing the communicating opening 1, the batteries can conveniently move between the battery swap operation room 10 and the battery compartment 20, the movement distance of the batteries between the battery swap operation room 10 and the battery compartment 20 is shortened, the process time of the battery swap work is reduced, and the battery swap efficiency is improved.

Finally, it is hereby noted that the foregoing implementations are merely intended to describe the technical solutions of this application but not to limit this application. Although this application has been described in detail with reference to the foregoing implementations, those of ordinary skill in the art should understand that modifications may still be made to the technical solutions described in the foregoing implementations, or equivalent replacements may still be made to some or all technical features in the technical solutions. Such modifications and replacements do not make the essence of the corresponding technical solutions depart from the scope of the technical solutions of the implementations of this application, and shall be covered by the scope of the claims and the specification of this application. In particular, as long as there is no structural conflict, the technical features mentioned in the various implementations can be combined in any way. This application is not limited to the particular implementations disclosed herein, but includes all technical solutions falling within the scope of the claims.

## Claims

1. A battery swap station, comprising:
a battery swap operation room, used for battery replacement of an electrical apparatus; and
a battery compartment, used for storing and charging batteries, the battery compartment being provided with a communicating opening, the communicating opening communicating the battery swap operation room with the battery compartment, and the communicating opening being used for the batteries to get in and out of the battery compartment.

2. The battery swap station according to claim 1, wherein the battery swap operation room and the battery compartment are adjacently arranged, the battery compartment comprises a compartment wall facing toward the battery swap operation room, and the communicating opening is disposed in the compartment wall.

3. The battery swap station according to claim 1 or 2, wherein charging devices are disposed inside the battery compartment and comprise charging bases and charging cabinets, the charging bases are used for storing the batteries, and the charging cabinets are used for charging the batteries through the charging bases.

4. The battery swap station according to claim 3, wherein the battery swap operation room and the battery compartment are adjacently arranged in a first direction, and a plurality of charging bases are provided and arranged in the first direction.

5. The battery swap station according to claim 4, wherein in the first direction, the communicating opening is disposed on one side of a plurality of charging devices close to the battery swap operation room, and the communicating opening is opposite at least some of the charging bases.

6. The battery swap station according to claim 4, wherein:
the plurality of charging bases are configured as two rows spaced apart in a second direction, wherein the second direction intersects the first direction; and
in the first direction, at least a portion of the communicating opening is opposite at least one row of the charging bases.

7. The battery swap station according to claim 6, wherein in the first direction, at least a portion of the communicating opening is opposite an interval between the two rows of the charging bases.

8. The battery swap station according to any one of claims 5 to 7, wherein:
the battery compartment comprises a first layer and a second layer which are arranged in a vertical direction, wherein the first layer is located below the second layer, and the vertical direction is perpendicular to the first direction and the second direction;
the communicating opening is disposed on the second layer; and
the charging bases comprise first charging bases closest to the communicating opening, and at least a part of each of the first charging bases is disposed on the first layer.

9. The battery swap station according to claim 8, wherein in the vertical direction, the first charging bases are lower than or flush with a lower edge of the communicating opening.

10. The battery swap station according to claim 9, wherein in the vertical direction, the first charging bases are lower than the lower edge of the communicating opening and are apart from the lower edge of the communicating opening at at least a preset distance, for placing the batteries on the first charging bases.

11. The battery swap station according to claim 10, wherein the charging bases further comprise second charging bases, and the second charging bases are disposed on the second layer.

12. The battery swap station according to claim 11, wherein in the vertical direction, the second charging bases are higher than the lower edge of the communicating opening.

13. The battery swap station according to any one of claim 9 to 12, wherein at least some of the charging cabinets are disposed on the first layer, and in one-to-one correspondence with the charging bases.

14. A battery swap method, comprising:
a demounting step including: demounting a battery from an electrical apparatus in a battery swap operation room and transferring the battery to a battery compartment; and
a mounting step including: extracting a battery from the battery compartment and transporting the battery to the battery swap operation room, and mounting the battery to the electrical apparatus, the battery swap operation room and the battery compartment being communicated through a communicating opening, and the battery getting in and out of the battery compartment through the communicating opening.

15. The battery swap method according to claim 14, wherein the battery swap method further comprises:
an adjusting step including: adjusting a gesture of the battery when conveying the battery to a position in the battery compartment close to the communicating opening, so that the battery aligns with the electrical apparatus located in the battery swap operation room.
